# EUROPEAN PATENT SPECIFICATION

(11) **EP 1 167 486 B1**
(45) Date of publication and mention of the grant of the patent: **17.11.2004**
(21) Application number: 00305173.7
(22) Date of filing: 19.06.2000
(51) Int. Cl.: C09K 5/08, C09K 5/20, C10M 171/06

(54) **Heat-transfer fluid containing nano-particles and carboxylates**
Wärmeübertragungsflüssigkeit enthaltend Nanopartikel und Carboxylate
Fluide de transfert thermique contenant des nanoparticules et des carboxylates

(43) Date of publication of application: 02.01.2002
(73) Proprietor: TEXACO DEVELOPMENT CORPORATION, White Plains, New York 10650 (US)
(72) Inventor: Maes, Jean-Pierre, B-9820 Merelbeke, Oost Vlaanderen (BE); Libot, Cecile, B-9000, Ghent, Oost Vlaanderen (BE); Roose, Peter, B-9831 Sint Martens Latem (BE); Lievens, Serge, B-9820 Merelbeke, Oost Vlaanderen (BE)
(74) Representative: Green, Mark Charles

(56) References cited:
- DE-A- 4 131 516
- DE-A- 19 852 203
- US-A- 4 647 392
- US-A- 5 098 609
- XUAN, Y. ET AL: "Heat transfer enhancement of nanofluids" INT. J. HEAT FLUID FLOW (2000), 21(1), 58-64 , XP000961518
- LEE S ET AL: "Measuring thermal conductivity of fluids containing oxide nanoparticles" TRANSACTIONS OF THE ASME. JOURNAL OF HEAT TRANSFER, MAY 1999, ASME, USA, vol. 121, no. 2, pages 280-289, XP000961462 ISSN: 0022-1481
- CHOI STEPHEN U S: "Enhancing thermal conductivity of fluids with nanoparticles" PROCEEDINGS OF THE 1995 ASME INTERNATIONAL MECHANICAL ENGINEERING CONGRESS AND EXPOSITION;SAN FRANCISCO, CA, USA NOV 12-17 1995, vol. 231, 1995, pages 99-105, XP000961538 ASME Fluids Eng Div Publ FED;American Society of Mechanical Engineers, Fluids Engineering Division (Publication) FED; Developments and Applications of Non-Newtonian Flows 1995 ASME, New York, NY, USA

## Description

The present invention relates to the application of sub-micron particles (nano-particles) and carboxylates for improving the heat-transfer characteristics of heat-transfer fluids or antifreeze coolants. The carboxylates form a stable physisorbed- or chemisorbed carboxylate protective layer on metallic nano-particles that does not hinder heat-transfer. The combination of carboxylates and metallic nano-particles provide excellent corrosion protection, improved heat-transfer and stability.

### BACKGROUND OF THE INVENTION

Heat-transfer fluids are used as heat carriers in many applications. Examples of use of heat-transfer fluids include the removal or exchange of excess heat from stationary and automotive internal combustion engines, heat generated by electrical motors and generators, process heat and condensation heat (e.g. in refineries and steam generation plants). In all of these applications the thermal conductivity and heat capacity of the heat-transfer fluid are important parameters in the development of energy-efficient heat-transfer equipment. To improve the total efficiency of their equipment, industries have a strong need to develop heat-transfer fluids with significantly higher thermal conductivities than presently available. It is well known that solids and in particular, metals have an order of magnitude larger thermal conductivities than fluids. Therefor, the thermal conductivities of fluids that contain suspended solid, and in particular, metallic particles would be expected to be significantly enhanced when compared with conventional fluids.

Many theoretical and experimental studies of the effective thermal conductivity of dispersions that contain solid particles have been conducted since Maxwell's theoretical work published in 1881. Maxwell's model shows that the thermal conductivity of suspensions that contain spherical particles increases with the volume fraction of the solid particles. It has also been shown that the thermal conductivity of suspensions increases with the ratio of the surface area to volume of the particle. Modern manufacturing techniques provide opportunities to process materials on a micro - and nanometer scale. The use of nano-particles was proposed (S.U. Choi, ASME Congress, San Francisco, CA, November 12-17, 1995) in heat-transfer fluids such as water, ethylene glycol and engine oil to produce a new class of engineered fluids (nanofluids) with improved heat-transfer capabilities. S.U. Choi et Al. (ASME Transactions 280, Vol.121, May 1999) report thermal conductivity measurements on fluids containing Al₂O₃ and CuO nano-particles. These experiments have shown that nanofluids, containing only a small amount of nano-particles, have substantial higher thermal conductivities then the same liquids (water, ethylene glycol) without nano-particles.

It is an object of the present invention to provide improved heat-transfer characteristics for heat-exchange fluids that contain carboxylates, by the addition of metallic sub-micron particles (nano-particles) to these heat-exchange fluids.

### PRIOR ART

German Patent DE 4,131,516 describes a heat-transfer fluid especially for solar collectors that contains finely divided aluminum powder and preferably phenolic antioxidant, anti-agglomerant and surfactant.

Co-assigned EP-A-0,229,440, EP-A- 0,251,480, EP-A- 0,308,037 and EP-A- 0,564,721 describe the use of carboxylate salts as corrosion inhibitors in aqueous heat exchange fluids or corrosion-inhibited antifreeze formulations. Improved corrosion protection is found for these carboxylate corrosion inhibitor combinations, compared to prior art corrosion inhibitors. EPA No. 99930566.1 describes aqueous solutions of carboxylates that provide frost and corrosion protection. Aqueous solutions of low carbon (C1-C2) carboxylic acid salts, in combination with higher carbon (C3-C5) carboxylic acid salts, were found to provide eutectic freezing protection. Improved corrosion protection was found by adding one or more than one C6-C16 carboxylic acids. The advantage of these carboxylic salts based cooling fluids over ethylene glycol- or propylene glycol cooling fluids is improved heat-transfer due to a higher specific heat and improved fluidity resulting from the higher water content at the same frost protection.

Yimin Xuan and Qiang Li (International Journal of Heat Fluid Flow (2000), 21(1), 58-64) describe a procedure for preparing a nano-fluid which is a suspension containing nano-phase powders and a base liquid. Copper particles of about 100 nm diameter are added to a water- and mineral oil- system to form a particulate suspension. In order to stabilise this suspension, oleic acid or laurate salt may be used as a dispersant.

DE-19852203 describes lubricants containing solid particles having an average particle size of 1-500 nm dispersed in an organic matrix. There is the general disclosure of these particles having a hydrophobic coating. The lubricants can be oil-in-water emulsions. There is a disclosure of the possibility of surface coating of these particles with, e.g., palmitic acid.

US-5,098,609 describes high thermal conductivity pastes comprising a thermally conductive filler, a non-aqueous liquid carrier and a stabilising dispersant. The filler may include nano-particles, whilst the dispersant may be octonoic acid.

Lee, Choi, Li and Easterman in ASME Journal of Heat Transfer, USA, Vol. 121, 2, 280-289 describe oxide nano-fluids which may be used as thermal conductivity agents.

### FIELD OF THE INVENTION

It has been found that the carboxylates react with the metallic surface to form a stable physisorbed- or chemisorbed carboxylate protective layer. This molecular layer protects the nano-particle from corrosion and stabilizes the colloidal solution or suspension of the nano-particles in a fluid with carboxylate components. Unlike protective films formed by traditional corrosion inhibitors the carboxylate physisorbed- or chemisorbed layer on the particle surface, does not impede the heat-transfer at the particle surface fluid interface. With traditional corrosion inhibitors relatively thick protective layers are formed that protect the metal from corrosion. However, the heat-exchange efficiency at the metallic surface-fluid interface is reduced by the thermal insulating properties of the protective film. It has been found that metallic nano-particles can be treated with carboxylates to provide a stable chemisorbed film on the metallic surface of the nano-particles. This treatment has been found to provide the nano-particles with a chemically bonded, corrosion and solvent resistant protective surface film. The carboxylate-treated metallic sub-micron particles (nano-particles) can be used in other functional fluids or soaps, such as lubricants and greases, to improve the thermal conductive properties of these fluids or soaps. The chemisorbed carboxylate layer on the particles provides corrosion protection and ensures optimized heat-transfer characteristics at the particle surface.

One aspect of the invention relates to the addition of aluminium nano-particles to heat-exchange fluids or engine coolants that contain C1-C16 carboxylates in order to further improve the heat-transfer characteristics of these fluids by increasing the thermal conductivity and heat capacity of the fluids. Another aspect of the invention relates to the addition of aluminium nano-particles to such heat-exchange fluids or engine coolants. The carboxylates contained in these fluids have been found to interact with the metallic surface or oxide surface of the aluminium nano-particles to form a stable physisorbed- or chemisorbed carboxylate protective layer. This molecular layer apparently protects the nano-particle from corrosion. Unlike traditional corrosion inhibitors, the carboxylate physisorbed or chemisorbed layer on the particle surface does not impede the heat transfer at the particle surface.

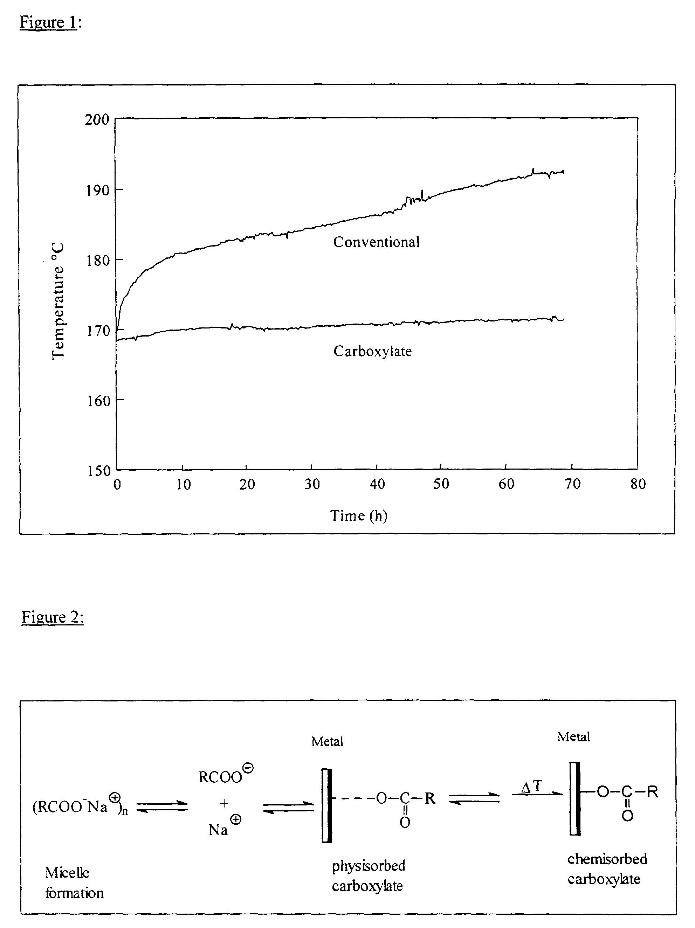

Maes et al. (ASTM STP 1192, p. 11-24, 1993) describe the corrosion protection afforded by carboxylate corrosion inhibitors compared to more traditional corrosion inhibitors. The efficiency of the carboxylate inhibitor was evaluated in weight loss corrosion tests under static and dynamic conditions. The thermal properties of the protective film formed by carboxylate corrosion inhibitor on the metallic surface was evaluated under dynamic conditions, in comparison with the thermal properties of protective films formed by conventional corrosion inhibitors. The temperatures of metallic coupons were monitored during dynamic heat-transfer tests as described in ASTM STP 1192, p. 11-24. A constant heat input (2000 W) was maintained. Figure 1 shows the mid-section temperature of a heated aluminum test specimen as recorded for a good performing conventional inhibitor and for the carboxylate inhibitor in coolant solutions. The mid-section metal temperature for the solution containing the carboxylate inhibitor remains fairly constant at about 170 °C, while for the conventional inhibitor much higher temperatures are found (190 °C is reached after 60 hours test duration). Since the thermal properties of the fluids are about equal, the temperature differential can be attributed to the protective film formed at the metal-fluid interface. It is thought that the formation of a relatively thick layer for the conventional inhibitor thermally insulates the metal and hinders effective heat-transfer. Under the dynamic conditions in the test, the insulating property of the protective film causes the temperature to rise. With the carboxylate inhibitor the temperature remains fairly constant, indicating that the protection afforded by the carboxylates does not interfere with the heat transfer at the metal-fluid interface.

Tentative protection mechanisms for carboxylate inhibitors have been described by Darden et al. (SAE paper 900804, 1990). The carboxylate anion forms a complex with the metal while it is still bound to its solid lattice. No bulk layer is formed, rather a layer of microscopic thickness at the anodic sites on the metal surface. A further characterization of layers formed by carboxylate inhibitors was reported in work by Verpoort et al. (Applied Spectroscopy, Vol. 53, No 12, 1999, p. 1528 -1534). Carboxylate films formed under dynamic heat-transfer conditions were studied with the use of X-ray photoelectron spectroscopy (XPS) and Fourier transform infrared (FT-IR). On basis of this characterization study and various insights from the literature, the general corrosion protection mechanism for carboxylate corrosion inhibitors is shown in Figure 2. The carboxylates form a stable physisorbed- or chemisorbed carboxylate protective layer on the metallic surface. The chemisorbed layer is formed when the specimen is subjected to intensive heat-transfer. XPS analysis of the surface of the coupon subjected to heat-transfer clearly proved the presence of chemically bonded carboxylates. Even after rinsing with solvents such as methanol and acetone, the carboxylate bond was still found to be present.

### FIGURES

Figure 1 shows the effect of protective films formed by conventional and carboxylate corrosion inhibitors on coupon temperature in dynamic heat-transfer test conditions.
Figure 2 shows the general mechanism for inhibition of metallic corrosion by carboxylic acids
Figure 3 is a schematic diagram showing nano-particles containing conventional and carboxylate inhibitors

### DISCLOSURE OF THE INVENTION

### Application of nano-particles in fluids containing carboxylate inhibitors.

One object of the present invention is to provide improved heat-transfer characteristics for heat-exchange fluids that contain carboxylates, by the addition of sub-micron particles (nano-particles) to those heat-exchange fluids.

### Carboxylates provide improved heat-transfer properties to fluids containing nano-particles.

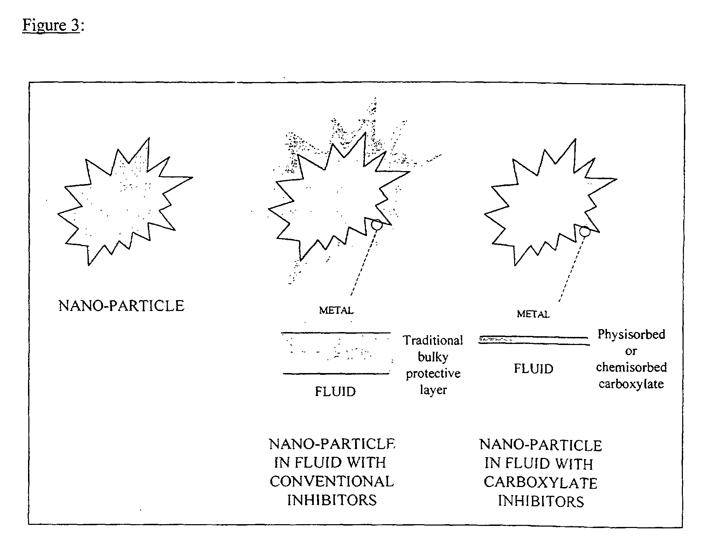

As demonstrated in Figure 1 for aluminum, carboxylates react with a metallic surface to form a stable physisorbed- or chemisorbed carboxylate protective layer. This molecular layer has been found on nano-particles and protects the nano-particle from corrosion. Unlike protective films formed by traditional corrosion inhibitors the carboxylate physisorbed or chemisorbed layer (Figure 2) on the particle surface does not impede the heat-transfer at the particle surface fluid interface. In contrast, traditional corrosion inhibitors will form relatively thick layers that protect the metal from corrosion. However, the heat-exchange efficiency at the metallic surface-fluid interface is reduced by the thermal insulating properties of the protective film. Figure 3 provides a schematic outline of how metallic nano-particles are thought to be protected by the system of the invention.

### Carboxylates stabilize the colloidal solution or suspension of the nano-particles.

Due to the micelle structure of the carboxylates in solution and the physisorbed- or chemisorbed carboxylates at the surface of the nano-particles (Figure 2), the carboxylates have been found to stabilize the colloidal solution or suspension of the nano-particles in a fluid. This is an advantage over systems of the prior art.

### Carboxylates can be used to treat nano-particles.

Another object of the invention is to treat metallic nano-particles with carboxylates to provide a stable chemisorbed film on the metallic surface of the nano-particles. This treatment provides the nano-particles with a chemically bonded, corrosion and solvent resistant protective surface film that does not impede heat-transfer.

### Carboxylate-treated nano-particles are useful in other engineering fluids or soaps.

Another object of the invention is to use the said carboxylate-treated metallic sub-micron particles (nano-particles) in other functional fluids or soaps, such as lubricants and greases, to improve the thermal conductive properties of these fluids or soaps. The chemisorbed carboxylate layer on the particles provides corrosion protection and ensures optimized heat-transfer characteristics at the particle surface.

## Claims

1. The use of sub-micron particles (nano-particles) of aluminium having a chemisorbed or physisorbed layer of carboxylate for improving the heat-transfer characteristics of heat-transfer fluids or antifreeze coolants.

2. The use as claimed in Claim 1 wherein the carboxylate is a combination of one or more C₁ - C₁₆ carboxylic acids or carboxylic acid salts.

3. The use as claimed in Claim 1 wherein the carboxylate is a combination of one or more C₁ - C₅ carboxylic acids or the salts thereof and one or more C₆ - C₁₆ carboxylic acids or the salts thereof.

4. A method for improving the heat-transfer capacity of a fluid by adding to or dispersing within said fluid sub-micron particles (nano-particles) of aluminium treated with at least one C₁ - C₁₆ carboxylic acid or carboxylic acid salt so as to form a chemisorbed or physisorbed carboxylate layer thereon.

5. A method for improving the heat-transfer capacity of a soap by adding to or dispersing within said soap sub-micron particles (nano-particles) of aluminium treated with at least one C₁ - C₁₆ carboxylic acid or carboxylic acid salt so as to form a chemisorbed or physisorbed carboxylate layer thereon.

6. A method as claimed in Claim 4 wherein said fluid is a heat-exchange fluid based on a water soluble alcohol freezing point depressant.

7. A method as claimed in Claim 4 or Claim 5 wherein said fluid or soap is a lubricant or hydraulic fluid based on mineral or synthetic oil, mineral or synthetic soap, or grease.

8. A heat exchange fluid or soap comprising sub-micron particles (nano-particles) of aluminium having a chemisorbed or physisorbed layer of carboxylate.

## Patentansprüche

1. Verwendung von Submikron- (Nano-) Aluminiumteilchen, die eine chemisorbierte oder physisorbierte Schicht Carboxylat aufweisen, für das Verbessern der Wärmeübertragungseigenschaften von Wärmeübertragungsfluiden oder Frostschutz-Kühlmitteln.

2. Verwendung nach Anspruch 1, wobei das Carboxylat eine Kombination von einer oder mehreren C₁-C₁₆-Carbonsäuren oder Carbonsäuresalzen ist.

3. Verwendung nach Anspruch 1, wobei das Carboxylat eine Kombination von einer oder mehreren C₁-C₅-Carbonsäuren oder den Salzen derselben und einer oder mehreren C₆-C₁₆-Carbonsäuren oder den Salzen derselben ist.

4. Verfahren für das Verbessern des Wärmeübertragungsvermögens eines Fluids durch Hinzugeben zu oder Dispergieren in dem Fluid von Submikron- (Nano-) Aluminiumteilchen, die mit mindestens einer C₁-C₁₆-Carbonsäure oder einem Carbonsäuresalz unter Bildung einer chemisorbierten oder physisorbierten Carboxylatschicht darauf behandelt worden sind.

5. Verfahren für das Verbessern des Wärmeübertragungsvermögens einer Seife durch Hinzugeben zu oder Dispergieren in der Seife von Submikron- (Nano-) Aluminiumteilchen, die mit mindestens einer C₁-C₁₆-Carbonsäure oder einem Carbonsäuresalz unter Bildung einer chemisorbierten oder physisorbierten Carboxylatschicht darauf behandelt worden sind.

6. Methode nach Anspruch 4, wobei das Fluid ein Wärmeaustauschfluid auf der Basis eines wasserlöslichen Passivators mit einem Alkoholgefrierpunkt ist.

7. Methode nach Anspruch 4 oder Anspruch 5, wobei das Fluid oder die Seife ein Schmiermittel oder ein hydraulisches Fluid auf der Basis von Mineral- oder synthetischem Öl, Mineral- oder synthetische Seife oder Schmierfett ist.

8. Wärmeaustauschfluid oder Seife umfassend Submikron-(Nano-) Aluminiumteilchen, die eine chemisorbierte oder physisorbierte Carboxylatschicht aufweisen.

## Revendications

1. Utilisation de particules, inférieures au micron (nanoparticules), d'aluminium, ayant une couche chimisorbée ou physisorbée de carboxylate, en vue de l'amélioration des caractéristiques de transfert thermique de fluides de transfert thermique ou de réfrigérants antigels.

2. Utilisation selon la revendication 1, dans laquelle le carboxylate est une combinaison d'un ou de plusieurs acides carboxyliques en C₁-C₁₆ ou de sels d'acides carboxyliques.

3. Utilisation selon la revendication 1, dans laquelle le carboxylate est une combinaison d'un ou de plusieurs acides carboxyliques en C₁-C₅ ou de sels de ces derniers et d'un ou de plusieurs acides carboxyliques en C₆-C₁₆ ou de sels de ces derniers.

4. Procédé d'amélioration de la capacité de transfert thermique d'un fluide en ajoutant ou en dispersant au sein dudit fluide des particules, inférieures au micron (nanoparticules), d'aluminium, traitées à l'aide d'au moins un acide carboxylique en C₁-C₁₆ ou d'un sel d'acide carboxylique, de manière à former, sur ces dernières, une couche chimisorbée ou physisorbée.

5. Procédé d'amélioration de la capacité de transfert thermique d'un savon en ajoutant ou en dispersant au sein dudit savon des particules, inférieures au micron, (nanoparticules), d'aluminium, traitées à l'aide d'au moins un acide carboxylique en C₁-C₁₆ ou d'un sel d'acide carboxylique, de manière à former, sur ces dernières, une couche chimisorbée ou physisorbée.

6. Procédé selon la revendication 4, dans lequel ledit fluide est fluide d'échange thermique à base d'un agent de dépression du point de congélation d'alcool hydrosoluble.

7. Procédé selon la revendication 4 ou la revendication 5, dans lequel ledit fluide ou savon est un lubrifiant ou un fluide hydraulique à base d'huile minérale ou synthétique, de savon minéral ou synthétique ou de graisse.

8. Fluide ou savon d'échange thermique comprenant des particules, inférieures au micron (nanoparticules), d'aluminium ayant une couche chimisorbée ou physisorbée de carboxylate.
